Europäisches Patentamt

(19) European Patent Office

Office européen des brevets

(11) Numéro de publication : **0 099 954**
**B1**

(12) **FASCICULE DE BREVET EUROPÉEN**

(45) Date de publication du fascicule du brevet :
22.10.86

(21) Numéro de dépôt : **82401401.3**

(22) Date de dépôt : **28.07.82**

(51) Int. Cl.⁴ : **C 04 B 24/30, C 08 G 12/08**

(54) **Nouveaux fluidifiants pour liants hydrauliques.**

(43) Date de publication de la demande :
08.02.84 Bulletin 84/06

(45) Mention de la délivrance du brevet :
22.10.86 Bulletin 86/43

(84) Etats contractants désignés :
**AT BE CH DE FR GB IT LI LU NL SE**

(56) Documents cités :
EP-A- 0 006 135
AT-B- 364 640
DE-B- 2 638 466
FR-A- 2 228 041
GB-A- 2 019 381
US-A- 3 936 408
US-A- 3 997 502

(73) Titulaire : **CHRYSO SA - Ets. de TOULOUSE**
**Rte de Longjumeau - BP. 1**
**F-91380 Chilly Mazarin (FR)**

(72) Inventeur : **Guicquero, Jean Pierre**
**1777 Avenue du Plantaurel**
**F-31120 Labarthe s/Leze (FR)**

(74) Mandataire : **Ravina, Bernard**
**Cabinet Bernard RAVINA 24, boulevard Riquet**
**F-31000 Toulouse (FR)**

## Description

La présente invention a pour objet de nouveaux fluidifiants pour liants hydrauliques tels que les ciments, les anhydrites, les plâtres les chaux et autres.

La présente invention couvre également les liants minéraux comportant les fluidifiants selon l'invention.

Les fluidifiants connus actuellement sont essentiellement des polynaphtalènes sulfonates et des résines de mélamines modifiées.

Le but de l'invention est d'obtenir des valeurs plus élevées de réduction d'eau employée pour le gâchage des liants que celles qui sont obtenues par les fluidifiants connus ainsi que des valeurs de résistances mécaniques accrues.

On connaît le brevet EP-A-6135 dans lequel des fluidifiants sont préparés à partir de mélamine, d'urée, de formaldéhyde et d'acide amino-sulfonique aromatique. Selon ce brevet (EP-A-6135), la préparation desdits fluidifiants est constituée de plusieurs étapes réactionnelles en vue de contrôler le degré de polymérisation.

Un autre but de la présente invention est de réaliser des fluidifiants en une seule étape réactionnelle, tout en contrôlant le degré de polymérisation par l'ajustement de la concentration de l'acide amino-sulfonique.

A cet effet, les nouveaux fluidifiants selon l'invention se caractérisent essentiellement en ce qu'ils sont des produits hydrosolubles de condensation d'acides sulfoniques aminés à au moins un noyau aromatique, de produits azotés à plusieurs fonctions NH2 et de formaldéhyde et en ce que le rapport moléculaire de l'acide aminosulfonique par rapport au composant azoté est compris entre 1,05 et 1,3.

Suivant une autre forme de réalisation caractéristique de l'invention, les fluidifiants sont des produits hydrosolubles de condensation d'acides sulfoniques aminés à plusieurs noyaux aromatiques ou un mélange d'acides sulfoniques aminés à un seul noyau aromatique.

Suivant une autre forme caractéristique de l'invention les fluidifiants sont un produit de condensation d'acides sulfoniques aminés à un et/ou plusieurs noyaux aromatiques et de produits polyaminés ou polyamides ou polythioamides ou de leurs dérivés mono ou polyméthylolés et de formaldéhyde ou de produits susceptibles de générer du formaldéhyde.

D'autres caractéristiques de l'invention apparaîtront à la lecture de la description ci-après de la composition du produit et de son procédé de fabrication illustré par des exemples et formules dans lequels il va de soi que quantités et proportions sont indiquées à titre non limitatif.

Les fluidifiants selon l'invention sont des produits hydrosolubles de condensation dont un des éléments de départ de la condensation par le formaldéhyde est constitué par des substances aminées aromatiques sulfonées.

Ces substances sont des acides sulfoniques aminés à un ou à plusieurs noyaux aromatiques ou un mélange desdites classes d'acides de formule générale.

$(NH2) \times A (SO3H)y$ dans laquelle x et y sont au moins égaux à 1.

A titre d'exemple non limitatif ces acides peuvent être constitués par :

— l'acide sulfanilique et/ou ses homologues substitués tels que : les acides toluidine sulfonique ou l'acide aminophénol sulfonique, ou l'acide 4 chlor 2 aminophénol 6 sulfonique,

— ou par l'acide aminonaphtalène sulfonique et ses homologues substitués,

— ou par les acides polysulfoniques, tels que l'acide aniline 2-5 disulfonique, ou l'acide diaminostilbène disulfonique, ou les acides amino naphtol disulfoniques ou les acides naphtylaminés trisulfoniques et leurs homologues substitués.

Sans sortir du cadre de l'invention, il peut être fait usage des acides sulfoniques aminés à plusieurs noyaux reliés entre eux par des ponts aliphatiques ou par des hétéroatomes tels que l'oxygène.

Un des éléments de départ de la condensation par le formaldéhyde donnant les fluidifiants selon l'invention en combinaison avec les acides sulfoniques aminés tels qu'énoncés sont des produits azotés.

Il sera employé comme produits azotés de départ des dérivés aminés pouvant donner des réactions d'addition avec le formol tels que par exemple les amino-triazines avec au moins deux fonctions NH2 que l'on peut figurer par la formule : $(NH2)z$ B dans laquelle z est supérieur ou égal à 2.

Ce peut être par exemple les produits suivants :

Urée, thiourée, benzoguanamine, mélamine, succinoguamamine, etc... ou leur mélange.

On peut également comme deuxième composant de départ de la condensation par le formaldéhyde utiliser des produits polyamines ou polyamides ou polythioamides ou leurs dérivés mono ou polyméthylolés.

Les meilleurs résultats sont obtenus par condensation des acides sulfaniliques ou toluidine-sulfoniques ou naphtylaminés sulfoniques et disulfoniques d'une part et de la mélamine ou ses dérivés méthyloles d'autre part.

Cette condensation de produits de type $(NH2) \times A (SO3H)y$ et de produits de type $(NH2)z$ B par le formaldéhyde ou une substance susceptible de libérer du formaldéhyde dans les conditions de la réaction (le formaldéhyde ou ses solutions acqueuses, formaldéhyde bisulfite, urotropine, trioxyméthylène etc...) peut être effectuée en milieu acide, neutre ou basique.

Selon une forme de réalisation de l'invention, le ou les acides aminés aromatiques sulfonés sont neutralisés et transformés en sel ce qui amène le Ph de la solution au voisinage de 11.

La neutralisation de la ou des fonctions acides sulfoniques est effectuée à l'aide de produits alcalins ou alcalinoterreux sous forme d'oxydes ou d'hydroxydes tels que la soude et ses solutions, la chaux ou une dispersion de chaux, la potasse, l'ammoniac, baryte etc... ou de base organique dans des conditions stœchiométriques.

La réaction de condensation est effectuée de manière connue en soi en mettant à réagir les matières de départ dans les rapports quantitatifs exigés.

On condense dans la proportion de 1,05 à 1,3 moles d'un acide sulfonique aminé aromatique (ou d'un mélange) de type (NH2) × A (SO3H)y et 1 mole du produit (NH2)z B avec une quantité de formaldéhyde comprise entre 1,5 et 2z-0,5 moles ou d'un générateur de formaldéhyde à une température comprise entre 40 et 115 degrés centigrade et de préférence entre 55 à 95 °C.

Selon la solubilité des produits obtenus, la concentration finale est ramenée entre 25 et 45 % avec une densité comprise entre 1,125 et 1,320.

Selon l'invention d'autres additifs peuvent apporter un effet complémentaire sans pour autant que le produit final sorte du cadre de l'invention.

Ces additifs peuvent être parmi les produits connus des silicates ou des aluminates solubles, dosés par exemple de 0,1 à 3 %.

Ces additifs peuvent être des polyéthers de masse moléculaire comprise entre par exemple 150 et 3 000 (de préférence 400 à 1 000).

Ce peut être des acides polycarboxyliques hydroxylés et de leurs sels dosés par exemple de 0,05 à 3 %.

Ce peut être des amines et de leurs dérivés hydroxyalcoxylés dosés par exemple de 0,05 à 3 %.

Ce peut être des ligno-sulfonates, des tensio-actifs peu moussants et des sels minéraux.

Tous ces additifs étant compatibles et connus pour leur propriété d'amélioration des résistances mécaniques des liants hydrauliques.

Les exemples suivants de préparation et d'application permettront de mieux comprendre l'invention sans la limiter. Les parties sont données en moles.

### Exemple 1

A une mole de mélamine dispersée dans 250 grammes d'eau est ajoutée 1,15 mole d'acide sulfanilique neutralisée et 3,5 moles de formaldéhyde en solution aqueuse à 30 %.

Le mélange réactionnel est porté à 65 °C pendant 1 heure. Le Ph final s'établit entre 8 et 9 et la concentration est ajustée à 30 % par ajout d'eau.

### Exemple 2

A une mole de mélamine dispersée dans 250 grammes d'eau est ajoutée 1,05 mole d'acide sulfanilique et 0,15 mole d'acide 1 naphtol 8 disulfonique 3-5, neutralisée par 1,35 mole de soude et 3,5 moles de formaldéhyde en solution aqueuse.

Le mélange réactionnel est porté à 65 °C pendant une heure. Le Ph final s'établit entre 8 et 9 et la concentration est ajustée à 30° par ajout d'eau.

Les solutions aqueuses ainsi obtenues peuvent être ajoutées au liant minéral hydraulique dans une proportion de l'ordre par exemple de 0,05 % à 10 % (de préférence de 0,1 à 3 %, rapporté à l'extrait sec de la solution) par rapport au poids du liant minéral.

Les tableaux ci-joints permettent de constater les résultats obtenus avec utilisation des fluidifiants selon l'invention.

Il va de soi que la présente invention peut recevoir des variantes sans pour autant sortir du cadre du présent brevet.

Composition béton
48,6 % de 5/15
27,5 % de 0/5
8    % de fines
15,9 % C P J 30

|         | DOSE | E / C | SLUMP | REDUCTION D'EAU % | RESISTANCE MPa C 24 H | 28 J |
|---------|------|-------|-------|-------------------|-----------------------|------|
| Témoin  |      | 0,54  | 7,5   |                   | 2,8                   | 31,3 |
| PNS     | 2,25 | 0,5   | 7     | 8,1               | 5,3                   | 36   |
| M.M.    | 2,25 | 0,48  | 7,    | 10,6              | 6,8                   | 38,3 |
| Ex.1    | 2,25 | 0,48  | 7,5   | 10,6              | 8,8                   | 38,6 |
| Ex.2    | 2,25 | 0,46  | 7,5   | 15,1              | 9,2                   | 39   |
| PNS     | 4,5  | 0,47  | 7,5   | 12,2              | 7,0                   | 37,8 |
| M.M.    | 4,5  | 0,46  | 7     | 15,1              | 9,3                   | 41,7 |
| Ex.1    | 4,5  | 0,445 | 9     | 17,4              | 12,3                  | 42,7 |
| Ex.2    | 4,5  | 0,44  | 8,5   | 18,6              | 12,6                  | 43   |

Même composition BETON avec CPA 55.

|         | DOSE | E / C | SLUMP | REDUCTION D'EAU % | RESISTANCE M P a C 24 H | 28 J |
|---------|------|-------|-------|-------------------|-------------------------|------|
| Témoin  |      | 0,54  | 7,5   |                   | 12,7                    | 46   |
| PNS     | 2,25 | 0,5   | 7     | 7                 | 16,1                    | 46,5 |
| M.M.    | 2,25 | 0,48  | 7     | 10,5              | 15,2                    | 52,8 |
| Ex.1    | 2,25 | 0,48  | 7,5   | 10,5              | 18,3                    | 54,2 |
| Ex.2    | 2,25 | 0,47  | 8     | 12,7              | 18,7                    | 55,3 |
| PNS     | 4,5  | 0,48  | 8,5   | 10,5              | 18                      | 49,5 |
| M.M.    | 4,5  | 0,465 | 7     | 14                | 17,2                    | 55,8 |
| Ex.1    | 4,5  | 0,465 | 8     | 14                | 19,8                    | 56,9 |
| Ex.2    | 4,5  | 0,46  | 8,5   | 15,1              | 20,1                    | 57,7 |

Légende :
Dose : Pour mille comptée en résine sèche
E : Quantité globale Eau + Solution de résine
Résistance C : Compression — F : Fendage en mégaPascal.

Même composition Béton avec CPA 55 à 30 de cendres.

| | DOSE | E/C % | MANIABILITE à 5' | RESISTANTE MPa 24 H C | F | 28 J C | F |
|---|---|---|---|---|---|---|---|
| Témoin | | 0,5 | 14"8 | 5,0 | 0,5 | 37,0 | 7,4 |
| PNS | 2,25 | 0,5 | 7" | 5,1 | 0,5 | 37,5 | 7,4 |
| M.M. | 2,25 | 0,5 | 8" | 5,5 | 0,8 | 38,9 | 7,5 |
| Ex.1 | 2,25 | 0,49 | 7"2 | 6,8 | 1,9 | 45,6 | 8,0 |
| Ex.2 | 2,25 | 0,49 | 7" | 6,9 | 2,1 | 46,7 | 8,3 |
| PNS | 4,5 | 0,49 | 6"2 | 7,0 | 1,8 | 48,3 | 7,0 |
| M.M. | 4,5 | 0,49 | 7"2 | 7,3 | 2,1 | 48,5 | 7,2 |
| Ex.1 | 4,5 | 0,43 | 5"6 | 12,5 | 3,4 | 60,8 | 8,0 |
| Ex.2 | 4,5 | 0,42 | 5"2 | 13,2 | 3,6 | 61,7 | 8,2 |
| Témoin | | 0,5 | 15"4 | 6,7 | 1,2 | 41,0 | 6,9 |

Même composition béton avec CPA 55 à 30 % de calcaire.

| | DOSE | E / C % | MANIABILITE à 5 | RESISTANCE MPa 24 H C | F | 28 J C | F |
|---|---|---|---|---|---|---|---|
| Témoin | | 0,5 | 9"2 | 5,9 | 1,2 | 37,3 | 6,2 |
| PNS | 2,25 | 0,49 | 5"2 | 5,2 | 0,8 | 34,6 | 6,4 |
| M.M. | 2,25 | 0,49 | 7"4 | 7,0 | 2,0 | 37,5 | 6,5 |
| Ex.1 | 2,25 | 0,48 | 6"2 | 7,5 | 2,2 | 42,1 | 6,6 |
| Ex.1 | 2,25 | 0,48 | 5"8 | 7,6 | 2,4 | 42,7 | 6,8 |

**0 099 954**

(Fortsetzung)

| | : DOSE | : E / C % | :MANIABILITE à 5' | : | RESISTANCE M P a 24 H 28 C | | |  |
|---|---|---|---|---|---|---|---|---|
| | | | | | C | F | C | F |
| Témoin : | | 0,5 | 12"8 | : | 6,1 : 1,1 | | 39,1 | 6,3 |
| PNS : 4,5 | | 0,47 | 5"6 | : | 6,4 : 1,5 | | 44,5 | 6,5 |
| M.M. : 4,5 | | 0,47 | 8" | : | 8,4 : 3,3 | | 46,4 | 7,0 |
| Ex.1 : 4,5 | | 0,43 | 5"6 | : | 12,7 : 3,5 | | 53,5 | 7,5 |
| EX.1 : 4,5 | | 0,42 | 5"2 | : | 13,1 : 3,6 | | 53,9 | 7,8 |

Légende :
PNS : Résine type polynaphtalène sulfonate
MM : Résine de Mélamine modifiée au bisulfite.

## Revendications

1. Fluidifiants pour liants hydrauliques tels que par exemple, ciments, anhydrites, plâtres, chaux et autres, lesdits fluidifiants sont des produits hydrosolubles de condensation d'acides sulfoniques aminés à au moins un noyau aromatique, de produits azotés à plusieurs fonctions NH2 et de formaldéhyde ou de produits susceptibles de générer du formaldéhyde, caractérisés en ce que le rapport molaire de l'acide amino sulfonique par rapport au composant azoté est compris entre 1,05 et 1,30.

2. Fluidifiants pour liants hydrauliques selon la revendication 1 caractérisés en ce que les produits azotés sont polyaminés ou polyamides ou polythioamides ou de leurs dérivés mono ou polyméthylolés.

3. Fluidifiants selon la revendication 1 caractérisés en ce que les produits azotés sont des dérivés aminés donnant des réactions d'addition avec le formol.

4. Fluidifiants selon la revendication 1 caractérisés en ce que les acides sulfoniques aminés à noyau aromatique utilisés sont un mélange d'acides sulfoniques aminés à un noyau aromatique et d'acides sulfoniques aminés à plusieurs noyaux aromatiques.

5. Fluidifiants selon les revendications 1 et 3 caractérisés en ce que les produits azotés sont des amino-triazines avec au moins deux groupes NH2 connus par exemple la mélamine, la guanamine, la succinoguamamine ou leurs mélanges.

6. Fluidifiants selon la revendication 1 caractérisés en ce que l'acide aminé sulfonique utilisé est l'acide sulfanilique et/ou ses homologues substitués tels que les acides toluidines sulfoniques et/ou l'acide amino phénol sulfonique et/ou l'acide 4 chlor 2 aminophénol 6 sulfonique.

7. Fluidifiants selon la revendication 1 caractérisés en ce que l'acide aminé sulfonique utilisé est l'acide aminonaphtalène sulfonique et ses homologues substitués.

8. Fluidifiants selon la revendication 1 caractérisés en ce que les acides aminés sulfoniques utilisés sont les acides polysulfoniques tels que par exemple l'acide aniline 2-5 disulfonique, et/ou l'acide diaminostilbène disulfonique et/ou les acides aminonaphtol disulfoniques et/ou les acides naphthylaminés trisulfoniques et leurs homologues substitués.

9. Fluidifiants selon la revendication 1 caractérisés en ce que les acides aminés sulfoniques utilisés sont des acides à plusieurs noyaux aromatiques reliés entre eux par des ponts aliphatiques ou par des hétéroatomes.

10. Fluidifiants selon les revendications 1 à 9 caractérisés en ce que les dits fluidifiants sont préparés dans une seule étape réactionnelle.

11. Procédé de fabrication des fluidifiants selon les revendications 1 à 10 dans lequel on condense des acides sulfoniques aminés à un ou à plusieurs noyaux aromatiques ou un mélange de tels acides de formule générale (NH2) × A (SO3H)y, dans laquelle x et y sont égaux au moins à 1 et des composants azotés d'une formule générale (NH2)z B ou z est supérieur ou égal à 2, à l'aide du formaldéhyde ou une substance susceptible d'en livrer ledit procédé étant caractérisé en ce que le rapport molaire de l'acide amino sulfonique par rapport au composant azoté est compris entre 1,05 et 1,30 et la ou les fonctions acides sulfoniques sont neutralisées.

12. Liants minéraux comportant des fluidifiants selon les revendications 1 à 10.

## Claims

1. Thinning agents for hydraulic binders such as cements, anhydrites, plasters, limes and others, said thinning agents are water-soluble condensates of amino-sulfonic acids with at least one aromatic nucleus, nitrogenous products with several NH2 functions and formaldehyde or products generating formaldehyde characterized by the fact that the molar ratio of amino-sulfonic acid in relation to the nitrogenous component is between 1.05 and 1.30.

2. Thinning agents for hydraulic binders according to claim 1 characterized by the fact that the nitrogenous products are polyamines, polyamides or polythioamides or their mono- or polymethylol derivatives.

3. Thinning agents according to claim 1 characterized by the fact that the nitrogenous products are amino-derivatives giving addition reactions with formol.

4. Thinning agents according to claim 1 characterized by the fact that the amino-sulfonic acids with aromatic nucleus used are a mixture of amino-sulfonic acids with one aromatic nucleus and amino-sulfonic acids with several aromatic nuclei.

5. Thinning agents according to claims 1 and 3 characterized by the fact that the nitrogenous products are amino-triazines with at least two known NH2 groups, for example melamine, guanamine, succinoguamamine or mixtures of these.

6. Thinning agents according to claim 1, characterized by the fact that the amino-sulfonic acid used is sulfanilic acid and/or its substitute homologues such as toluidine sulfonic acids and/or amino phenol sulfonic acid and/or 4-chloro 2-aminophenol 6 sulfonic acid.

7. Thinning agents according to claim 1 characterized by the fact that the amino-sulfonic acid used is amino-naphthalene sulfonic acids and substitute homologues.

8. Thinning agents according to claim 1 characterized by the fact that amino-sulfonic acids used are polysulfonic acids such as aniline 2-5 disulfonic acid, and/or diaminostilbene disulfonic acid and/or aminonaphthol disulfonic acids and/or naphthylamine trisulfonic acids and their substitute homologues.

9. Thinning agents according to claim 1 characterized by the fact that amino-sulfonic acids used are acids with several aromatic nuclei interconnected by aliphatic bridges or by heteroatoms.

10. Thinning agents according to claims 1 to 9 characterized by the fact that said thinning agents are prepared in a single reactional stage.

11. Manufacturing process of thinning agents according to claims 1 to 10 in which are condensed amino-sulfonic acids with one or several aromatic nuclei or a mixture of such acids of general formula (NH2) × A (SO3H) y, where x and y are equal at least to 1 and nitrogenous components of a general formula (NH2)$_z$B where Z is greater than or equal to 2, using formaldehyde or a substance liable to generate formaldehyde, said process being characterized by the fact that the molar ratio of amino-sulfonic acid in relation to the nitrogenous component is between 1.05 and 1.30 and the sulfonic acid function(s) are neutralized.

12. Mineral binders comprising thinning agents according to claims 1 to 10.

## Patentansprüche

1. Verflüssiger für hydraulische Bindemittel wie zum Beispiel Zemente, Anhydrite, Gipse, Kalke und andere Mittel, die vorgenannten Verflüssiger sind wasserlöslische Kondensate von Aminosulfonsäuren mit mindestens einem aromatischen Kern, von Stickstoffprodukten mit mindestens einem aromatischen Kern, von Stickstoffprodukten mit mehreren NH2 Funktionen und von Formaldehyd oder von dazu geeigneten Produkten, Formaldehyd zu erzeugen, dadurch gekennzeichnet, dass das Molverhältnis der Aminosulfonsäure in Bezug auf den Stickstoffbestandteil zwischen 1,05 und 1,30 liegt.

2. Verflüssiger für hydraulische Bindemittel nach Anspruch 1, dadurch gekennzeichnet, dass die Stickstoffprodukte Polyamin- oder Polyamid- oder Polythioamidprodukte oder Mono- oder Polymethylderivate sind.

3. Verflüssiger nach Anspruch 1, dadurch gekennzeichnet, dass die Stickstoffprodukte Aminderivate sind, die Additionsreaktionen mit dem Formol erzeugen.

4. Verflüssiger nach Anspruch 1, dadurch gekennzeichnet, dass die angewandten Aminosulfonsäuren mit aromatischen Kernen ein Gemisch von Aminosulfonsäuren mit einem Kern und von Aminosulfonsäuren mit mehreren aromatischen Kernen sind.

5. Verflüssiger nach Ansprüchen 1 und 3, dadurch gekennzeichnet, daß die Stickstoffprodukte Aminotriazine mit mindestens zwei bekannten NH2 Gruppen z. B. Melamin, Guanamin, Succinoguanamin oder deren Gemisch sind.

6. Verflüssiger nach Anspruch 1, dadurch gekennzeichnet, daß die angewandte Aminosulfonsäure Sulfanilsäure bzw. ihre substituierten Homologe wie Toluolsulfonsäuren bzw. Aminophenolsulfonsäure bzw. 4 Chlor 2 Aminophenol 6 Sulfonsäure sind.

7. Verflüssiger nach Anspruch 1, dadurch gekennzeichnet, daß die angewandte Aminosulfonsäure Aminonaphtalsulfonsäure und ihre substituierte Homologe sind.

8. Verflüssiger nach Anspruch 1, dadurch gekennzeichnet, daß die angewandten Aminosulfonsäure Polysulfonsäuren wie z. B. Anilin 2-5 Disulfonsäure, bzw. Diaminostilbendisulfonsäure bzw. Aminonaphtoldisulfonsäuren bzw. Naphthylamintrisulfonsäuren und ihre substituierten Homologe sind.

9. Verflüssiger nach Anspruch 1, dadurch gekennzeichnet, dass die angewandten Aminosulfonsäuren Säuren mit mehreren aromatischen Kernen sind, die durch aliphatische Brücken oder Heteroatome zusammengebunden sind.

10. Verflüssiger nach Ansprüchen 1 bis 9, dadurch gekennzeichnet, daß die vorgenannten Verflüssiger in einer einzigen Reaktionsphase vorbereitet werden.

11. Fertigungsverfahren für Verflüssiger nach Ansprüchen 1 bis 10, dadurch gekennzeichnet, daß die Aminosulfonsäuren mit einem oder mehreren aromatischen Kernen oder ein Gemisch solcher Säuren der allgemeinen Formel (NH2) x A (SO3H), in der x und y wenigstens gleich 1 sind und Stickstoffbestandteile der allgemeinen Formel (NH2) B, in der z höher oder gleich 2 ist, mit Formaldehyd oder einer dazu geeigneten Substanz, Formaldehyd zu erzeugen, kondensiert werden und das vorgenannte Verfahren dadurch gekennzeichnet ist, dass das Molverhältnis der Aminosulfonsäure im Verhältnis zum Stickstoffbestandteil zwischen 1,05 und 1,30 liegt und die sulfonsäurefunktion(en) neutralisiert ist (sind).

12. Mineralbindemittel, die nach Ansprüchen 1 bis 10 Verflüssiger enthalten.